# EUROPÄISCHE PATENTSCHRIFT

(11) **EP 1 864 588 B1**
(45) Veröffentlichungstag und Bekanntmachung des Hinweises auf die Patenterteilung: **11.04.2012**
(21) Anmeldenummer: 07011260.2
(22) Anmeldetag: 08.06.2007
(51) Int. Cl.: A46B 3/06, A46D 3/00

(54) **Zahnbürste und Verfahren zu deren Herstellung**
Tooth brush and method for its production
Brosse à dents et procédé destiné à sa fabrication

(30) Priorität: 08.06.2006 DE 102006026712
(43) Veröffentlichungstag der Anmeldung: 12.12.2007
(73) Patentinhaber: M+C Schiffer GmbH, 53577 Neustadt-Wied (DE)
(72) Erfinder: Clos, Thomas, 50968 Köln (DE)
(74) Vertreter: Grünecker, Kinkeldey, Stockmair & Schwanhäusser

(56) Entgegenhaltungen:
- EP-A- 1 110 478
- EP-A1- 0 623 298
- WO-A-2005/013762
- DE-C1- 3 511 528
- DE-U1- 20 303 934

## Beschreibung

Die Erfindung betrifft ein Verfahren zur Herstellung einer Zahnbürste, welches die Schritte umfasst: Einführen eines Borstenbündels in einen an einer Trägerplatte vorgesehenen Kanal, derart, dass das nutzungsseitige Ende des Borstenbündels die Oberseite der Trägerplatte und das befestigungsseitige Ende des Borstenbündels die Unterseite der Trägerplatte überragt; Anschmelzen des befestigungsseitigen Endes des Borstenbündels zum Ausformen einer Verdickung und Hinterspritzen der Unterseite unter Zwischenlage der Verdickung. Die Zahnbürste soll für eine effektivere und dabei gleichzeitig angenehmere Reinigung der Zähne sorgen.

Ein gattungsbildendes Verfahren ist aus der EP 0 623 298 B1 bekannt. Gemäß diesem bekannten Verfahren wird in einem ersten Schritt ein Kunststoff in einen durch zwei Formhälften ausgebildeten Formhohlraum gespritzt, um einen Zahnbürsten-Grundkörper zu formen, der einen Griffstiel, einen Hals und eine mit dem Hals verbundene Trägerplatte, die mit mehreren Kanälen ausgebildet ist, aufweist. Der einteilig ausgebildete Grundkörper wird aus der Form entnommen, Borstenbündel werden in die jeweiligen Kanäle der Trägerplatte eingestopft und anschließend an deren befestigungsseitigen Enden angeschmolzen. Danach wird der Grundkörper mit darin gehaltenen Borstenbündeln in eine weitere Spritzgussform eingesetzt, um die Rückseite der Trägerplatte unter Zwischenlage der jeweiligen Verdickungen der Borstenbündel zu hinterspritzen. Die Verdickungen befinden sich danach zwischen der Trägerplatte und der Hinterspritzung und verschließen die Kanäle endseitig. So dient der Grundkörper insbesondere der dichtenden Anlage der Umfangsfläche der Trägerplatte an die Innenseite der weiteren Spritzgussform, wodurch ein Formhohlraum zwischen der Rückseite der Trägerplatte, einer Stirnseite des Bürstenhalses und jeweils diesen Seiten gegenüberliegenden Begrenzungsflächen der weiteren Spritzgussform gebildet wird, deren von den Borstenbündeln durchragte Kanäle abgedichtet sind, so dass auch bei hohen Spritzdrücken keine Überspritzung der Kanäle zu befürchten ist. Durch das Hinterspritzen wird somit lediglich eine an der Rückseite der Trägerplatte anliegende Hinterspritzung gebildet. Diese Hinterspritzung bildet somit zusammen mit der Trägerplatte den die Borstenbündel tragenden Bürstenkopf der Zahnbürste.

Bei diesem gattungsbildenden Verfahren wird somit zuerst der Grundkörper gespritzt und anschließend zu einer weiteren Spritzgussform überführt. Das Überführen des Grundkörpers zwischen den Verfahrensschritten Bestopfen, Anschmelzen und Hinterspritzen ist mit einem hohen Aufwand verbunden, da das Zwischenprodukt von einem Spritzgussbereich zu einem Bestopfungsbereich außerhalb der Spritzgussmaschine überführt werden muss. Das bekannte Verfahren weist somit eine niedrige Produktivität auf. Außerdem wird durch dieses Verfahren die Gestaltungsfreiheit der Zahnbürste eingeschränkt, da die Trägerplatte, der Bürstenhals und der Griffstiel einteilig aus ein und demselben Kunststoffmaterial ausgebildet werden.

Unter Berücksichtigung des vorgenannten bekannten Verfahrens ist es eine Aufgabe der vorliegenden Erfindung, ein Verfahren zur Herstellung einer Zahnbürste bereitzustellen, welches eine größere Gestaltungsfreiheit bei der Herstellung von Zahnbürsten bei hoher Produktivität ermöglicht.und welches sich insbesondere zur Herstellung einer effektiv reinigenden und das subjektive Putzempfinden verbessernden Zahnbürste eignet.

Die der Erfindung zugrunde liegenden Aufgaben werden erfindungsgemäß durch ein Verfahren mit den Merkmalen von Anspruch 1 gelöst, das durch Umspritzen der Trägerplatte zum Ausformen einer die Trägerplatte formschlüssig umfassenden Umspritzung gekennzeichnet ist.

Die Umspritzung kann beispielsweise derart ausgebildet werden, dass mehrere Vorsprünge geformt werden, die formschlüssig in z. B. an der Umfangsfläche der Trägerplatte ausgebildete Taschen eingreifen. Das Hinter- und Umspritzen kann in verschiedenen aufeinander folgenden Schritten und/oder unter Verwendung unterschiedlicher Kunststoffmaterialien durchgeführt werden. Die Trägerplatte weist vorzugsweise mehrere Kanäle auf und es wird vorzugsweise jeweils ein Borstenbündel in jeden Kanal eingeführt. Die Borstenbündel können beispielsweise gleichzeitig in die für sie vorgesehenen Kanäle eingeführt werden. Die Trägerplatte ist vorzugsweise ein separates, regelmäßiges, nur an dem Bürstenkopf vorgesehenes Bauteil, welches durch das formschlüssige Umspritzen zuverlässig mit einem Zahnbürsten-Grundkörper verbunden wird. Zuverlässig bedeutet insbesondere, dass, auch wenn die Trägerplatte aus einem anderen Material als der Grundkörper gebildet wird, diese ortsfest und unlösbar in der herzustellenden Zahnbürste aufgrund der Umspritzung fixiert wird, selbst wenn die Werkstoffe der Trägerplatte und der Umspritzung haftungsinkompatibel sind. Die Länge und Anzahl der ein Borstenbündel bildenden Borstenfilamente kann beliebig gewählt werden. Bei einer großen Anzahl von kurz geschnittenen Borstenbündeln mit jeweils wenigen Filamenten zum Ausformen eines nahezu gleichmäßigen Borstenteppichs ("Bed of bristles") wird durch die kombinatorische Wirkung von Umspritzung und Trägerplatte eine Schiefstellung der Borstenbündel verhindert und hohe Borstenbündelauszugskräfte erzielt.

Gemäß einer bevorzugten Ausführungsform wird durch die Umspritzung ein die Trägerplatte fassender Rand ausgebildet. Der Rand kann beispielsweise derart ausgebildet werden, dass er teilumfänglich, d.h. in vorbestimmten Abständen in Umfangsrichtung der Trägerplatte an ihrer Umfangsfläche formschlüssig anliegt.

Gemäß einer weiteren bevorzugten Ausführungsform wird der Rand vollumfänglich an der Umfangsfläche ausgeformt, um die Trägerplatte sehr zuverlässig in der herzustellenden Zahnbürste zu halten.

Das Hinter- und Umspritzen wird gemäß einer bevorzugten Ausführungsform in einem Schritt durchgeführt. Durch das gleichzeitige Hinter- und Umspritzen werden die formschlüssige Umspritzung und die Hinterspritzung unter Zwischenlage der Verdickung gleichzeitig geformt. Hierdurch kann die Produktivität des Verfahrens erhöht werden.

Gemäß einer weiteren Ausführungsform der vorliegenden Erfindung wird der Rand derart ausgeformt, dass 1/3 bis 2/3 der Höhe der Trägerplatte durch das Hinter- und Umspritzen eingebettet wird. Hierdurch wird eine besonders wirksame Fixierung der Trägerplatte in der Zahnbürste erzielt und gleichzeitig die Möglichkeit geschaffen, die von den Borstenbündeln durchragte Oberseite aus dem Material der Trägerplatte zu bilden und von der regelmäßig durch eine Hartkomponente gebildeten Umspritzung höhenmäßig zu beabstanden. Vorzugsweise wird der Rand derart ausgeformt, dass die obere an der Umfangsfläche der Trägerplatte anliegende Kante des Randes auf ein und demselben Höhenniveau entlang der gesamten Umfangsfläche der Trägerplatte liegt. Die obere Kante kann zum Erhöhen des optischen Erscheinungsbildes der Zahnbürste in Umfangsrichtung der Trägerplatte jedoch auch auf unterschiedlichen, regelmäßig wiederkehrenden Höhenniveaus liegen. Beispielsweise kann der Rand derart ausgebildet werden, dass die obere Kante wellenförmig in Umfangsrichtung der Trägerplatte verläuft. Auch die von den Borstenbündeln durchragte Oberfläche der Trägerplatte kann konturiert sein.

Gemäß einer weiteren bevorzugten Ausführungsform wird die Trägerplatte mit einer in etwa der Grundfläche eines Bürstenkopfes entsprechenden Grundfläche ausgebildet. Die Trägerplatte bildet somit den wesentlichen Teil der Oberfläche des Bürstenkopfes und ihre Form ist maßgebend für die Form des Bürstenkopfes der herzustellenden Zahnbürste.

Gemäß einer bevorzugten Ausführungsform der vorliegenden Erfindung wird durch das Umspritzen gleichzeitig ein Zahnbürsten-Grundkörper gespritzt, der einen Bürstenkopf, einen Hals und einen Griffstiel aufweist. Es wird somit lediglich eine Spritzgussform benötigt, um die Borstenbündel in der Zahnbürste zu fixieren bzw. um die Trägerplatte und den Grundkörper zu verbinden. Die Produktivität wird hierdurch erhöht und die Herstellungskosten gesenkt.

Gemäß einer bevorzugten Ausführungsform wird das Borstenbündel nach dem Einführen an seinem befestigungsseitigen Ende auf eine Länge geschnitten und angeschmolzen. Durch das Schneiden können konturierte Borstenbündel erzeugt werden, wobei das Verkürzen der Filamente an den befestigungsseitigen Enden den Vorteil mit sich bringt, dass vorbeschliffene Filamente Verwendung finden können.

Gemäß einer weiteren bevorzugten Ausführungsform wird zum Einführen des Borstenbündels die Trägerplatte zwischen einer einen Kanal aufweisenden Bestopfungsplatte und einer einen Kanal aufweisenden Lochfeldplatte derart angeordnet, dass die Längsachsen der jeweiligen Kanäle der Trägerplatte, der Bestopfungsplatte und der Lochfeldplatte fluchten, und dass das zunächst in dem Kanal der Bestopfungsplatte gehaltene Borstenbündel durch Drücken gegen sein befestigungsseitiges Ende in den Kanal der Trägerplatte und in den Kanal der Lochfeldplatte eingeschoben wird. Die Trägerplatte, die Bestopfungsplatte und die Lochfeldplatte weisen vorzugsweise jeweils mehrere Kanäle auf, deren jeweilig Längsachsen beim Einführen jeweils miteinander fluchten. Die Mündung der Kanäle der Bestopfungsplatte ist vorzugsweise trichterförmig ausgebildet, um das Einführen des nutzungsseitigen Endes des Borstenbündels in den Kanal der Bestopfungsplatte durch Drücken an dem befestigungsseitigen Ende zu erleichtern. Die Bestopfungsplatte dient der Vorbereitung des Borstenfeldes und dem raschen Überführen der Borstenbündel in die Trägerplatte. Um die jeweiligen Kanäle der Trägerplatte, der Bestopfungsplatte und der Lochfeldplatte genau aufeinander auszurichten, wird die Trägerplatte beispielsweise in einer Vertiefung der Lochfeldplatte und/oder einer Vertiefung der Bestopfungsplatte aufgenommen und damit positioniert. Beispielsweise weisen die Lochfeldplatte und die Bestopfungsplatte korrespondierende Vertiefungen auf, die die Trägerplatte derart aufnehmen, dass diese ortsfest fixiert wird. Die Trägerplatte, die Bestopfungsplatte und die Lochfeldplatte werden gemäß einer bevorzugten Ausführungsform jeweils mit dem gleichen Lochfeldmuster derart ausgebildet, dass die Borstenbündel an der Zahnbürste entsprechend dem Lochfeldmuster angeordnet werden.

Gemäß einer bevorzugten Ausführungsform wird das Borstenbündel durch die mit dem Kanal der Bestopfungsplatte fluchtenden Kanäle der Träger- und Lochfeldplatte so hindurchgeführt, dass nach dem Einführen das nutzungsseitige Ende des Borstenbündels die Oberseite der Lochfeldplatte und das befestigungsseitige Ende des Borstenbündels die Unterseite der Bestopfungsplatte überragt. Hierdurch wird beim Entfernen der Bestopfungsplatte ein ausreichender Abschnitt des Borstenbündels von den Kanälen der Trägerplatte und Lochfeldplatte gehalten, was insbesondere ein zuverlässiges Überführen der in der Lochfeldplatte und Trägerplatte gehaltenen Borstenbündel zu einer Spritzgussform ermöglicht und das Anschmelzen einer Verdickung an dem befestigungsseitigen Ende des Borstenbündels begünstigt.

Gemäß einer weiteren bevorzugten Ausführungsform werden Borstenbündel bildende Borstenfilamente vor Überführen in die Bestopfungsplatte vereinzelt angespitzt und zu einem Borstenbündel zusammengeführt. Solche angespitzten Borstenfilamente sind auch als Tapered-Filamente oder Triad-Filamente bekannt.

Insbesondere bei der Herstellung der vorliegend Zahnbürste mit dem erfindungsgemäßen Verfahren ist es vorteilhaft, die Borstenbündel durch Abziehen eines Filamentstranges von einem Endlosstrang und Abschneiden einzelner Borstenbündel von diesem Strang zu erzeugen. Der jeweils zur Anwendung kommende Filamentstrang hat vorzugsweise zwischen sechs und zwölf Filamente und ist als Endlosstrang auf einer Spule aufgewickelt. Das zyklische Zuführen des Stranges ist als solches bekannt. Allerdings wird bei der bevorzugten Weiterbildung der Endlosstrang in die Kanäle der Bestopfungsplatte eingebracht, welche dem Überführen der Borstenbündel an die Trägerplatte dient. Nach dem Überführen des Stranges in die Kanäle der Bestopfungsplatte wird das Borstenbündel durch Schneiden eines Längensabschnitts von dem Strang erzeugt. Das so gebildete Borstenbündel kann danach weiter bearbeitet werden, insbesondere an seinem nutzungsseitigen Ende geschliffen und/oder angespitzt werden.

Gemäß einer weiteren bevorzugten Ausführungsform wird das Borstenbündel beim Anschmelzen durch die Lochfeldplatte und die Trägerplatte gehalten. Nach dem Einführen wird somit die Bestopfungsplatte entfernt und lediglich die Trägerplatte und die Lochfeldplatte fixieren die Borstenbündel beim Anschmelzen, wobei nach Entfernen der Bestopfungsplatte ein zum Anschmelzen ausreichender Borstenbündelabschnitt bereitgestellt wird.

Gemäß einer weiteren bevorzugten Ausführungsform wird nach dem Anschmelzen die Lochfeldplatte in eine Formhälfte einer Spritzgussform derart eingesetzt, dass die Unterseite der Lochfeldplatte in der Trennebene der Spritzgussform liegt, und die Trägerplatte wird in einem Halteabschnitt einer Vertiefung der Lochfeldplatte derart gehalten, dass das nutzungsseitige Ende des von der Lochfeldplatte geführten Borstenbündels in einem Formhohlraum der Formhälfte freiliegt und die Begrenzungsflächen des Halteabschnitts dicht an der Trägerplatte anliegen. Die Tiefe des Halteabschnitts der Vertiefung entspricht vorzugsweise ungefähr 1/3 bis 2/3 der Höhe der Trägerplatte. Die Begrenzungsflächen des Halteabschnitts liegen derart an der Trägerplatte an, um während des Hinter- und Umspritzens das Einströmen von Kunststoffmaterial zwischen den Begrenzungsflächen des Halteabschnitts und der Umfangsfläche der Trägerplatte zu verhindern. Durch diese dichtende Halterung der Trägerplatte können hohe Spritzgießgeschwindigkeiten und -drücke beim Ausbilden des Grundkörpers zum Einsatz kommen. Auch sind aus dem Stand der Technik bekannte Borstenrückenlagen zum Fixieren der nutzungsseitigen Enden der Borstenbündel während des Spritzgießvorgangs gemäß dieser bevorzugten Ausführungsform entbehrlich, da die Borstenbündel durch die Lochfeldplatte und die Trägerplatte während des Spritzgießvorgangs geführt und axial durch die gegen die Kanäle der Trägerplatte anliegenden Verdickungen fixiert werden.

Gemäß einer bevorzugten Ausführungsform der vorliegenden Erfindung wirkt die Lochfeldplatte beim Hinter- und Umspritzen formgebend auf das den Rand bildende Kunststoffmaterial ein. Die Form und Größe der an der Trägerplatte auszuformenden formschlüssigen Umspritzung wird somit von der Lochfeldplatte, beispielsweise durch einen Randformgebungsabschnitt der Lochfeldplatte bestimmt. Die Lochfeldplatte dient somit nicht nur zum Halten der Trägerplatte beim Einführen der Borstenbündel und während des Spritzgießvorgangs.

Gemäß einer weiteren bevorzugten Ausführungsform wird das befestigungsseitige Ende des Borstenbündels mit seiner durch Anschmelzen gebildeten Verdickung vor dem Umspritzen gegen eine Mündung des Kanals der Trägerplatte angelegt. Vorzugsweise werden die Verdickungen dichtend angelegt, um das Einströmen von Kunststoffmaterial in die Kanäle der Trägerplatte zu verhindern. Um diese dichtende Wirkung weiterhin zu erhöhen, werden die Mündungen der Kanäle der Trägerplatte, an welchen die Verdickungen anliegen, vorzugsweise trichterförmig ausgeformt.

Gemäß einer bevorzugten Ausführungsform wird die Trägerplatte durch ein thermoplastisches Elastomer oder eine Hartkomponente, beispielsweise Polypropylen gebildet. Durch die formschlüssige Umspritzung wird eine zuverlässige Verbindung einer aus einem thermoplastischen Elastomer gebildeten Trägerplatte erzielt, wodurch die Gestaltungsfreiheit zum Ausbilden einer Zahnbürste wesentlich erhöht wird. Die Trägerplatte wird gemäß einer weiteren bevorzugten Ausführungsform mit Polypropylen umspritzt. Aufgrund der formschlüssigen Umspritzung können beispielsweise auch ein aus Polypropylen geformter Grundkörper und eine aus einem anderen mitunter auch haftungsinkompatiblen Kunststoffmaterial als Polypropylen geformte Trägerplatte zuverlässig miteinander verbunden werden.

Gemäß einer weiteren bevorzugten Ausführungsform wird die Trägerplatte derart gebildet, dass der Bereich der Umfangsfläche, an dem die Umspritzung ausgeformt-wird, einen Hinterschnitt aufweist. Durch diesen Hinterschnitt wird die Verbindung zwischen Trägerplatte und Zahnbürsten-Grundkörper weiter verbessert. Der Hinterschnitt kann beispielsweise als ein radialer Vorsprung oder eine Auswölbung gebildet werden.

Die Zahnbürste hat eine Trägerplatte, die von Feinbündeln durchragte Kanäle aufweist. Diese Feinbündel zeichnen sich durch einen relativ geringen Durchmesser und insbesondere eine sehr geringe Anzahl von dem Borstenbündel umfassenden Filamenten aus. Die Feinbündel haben zwischen sechs und zwölf Filamenten. Da eine Abstützung ein- / D zelner, in jedem Feinbündel enthaltener Filamente bei der Benutzung der Zahnbürste kaum zu erwarten ist, können sich die einzelnen Filamente eines Feinbündels leicht biegen. Die Feinbündel zeigen daher eine relativ hohe Flexibilität, die sich genau durch die elastischen Eigenschaften des Filamentmaterials anpassen lassen. Vorzugsweise sind zwischen 80 und 300 solcher Feinbündel an dem Bürstenkopf der Zahnbürste vorgesehen. Es ergibt sich bei dieser Ausgestaltung eine Art gleichmäßiger Teppich, der nahezu vollflächig gegen die zu reinigenden Zahnflächen wirkt und damit zu einer effektiven Reinigung führt. Im Übrigen ergibt sich auf Grund der flächigen Abstützung eine gleichmäßigere Druckverteilung bei der Putzbewegung gegen die Zähne und insbesondere gegen das empfindliche Zahnfleisch. Zur Beeinflussung der Putzeigenschaften und des Empfindens des Benutzers wird weiterhin vorgeschlagen, die Feinbündel mit einem Durchmesser von zwischen 0,4 und 1,0 mm, vorzugsweise zwischen 0,6 und 0,8 mm vorzusehen. Die die Feinbündel bildenden Filamente haben im Hinblick darauf vorzugsweise einen Durchmesser von 0,1 bis 0,25 mm.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser Zeichnung zeigen: -
- Fig. 1: eine Längsschnittansicht einer Trägerplatte;
- Fig. 2: eine das Einführen von Borstenbündeln in die in Fig. 1 gezeigte Trägerplatte ver- deutlichende Längsschnittansicht;
- Fig. 3: eine Längsschnittansicht einer Lochfeldplatte;
- Fig. 4: eine Längsschnittansicht einer Spritzgussform mit darin aufgenommener Träger- platte und Lochfeldplatte;
- Fig. 5: eine vergrößerte Ansicht eines Bürstenkopfes einer nach dem Spritzgießen erhal- tenen Zahnbürste, und
- Fig. 6: eine Draufsicht auf ein Ausführungsbeispiel eines Bürstenkopfes einer Zahnbürste

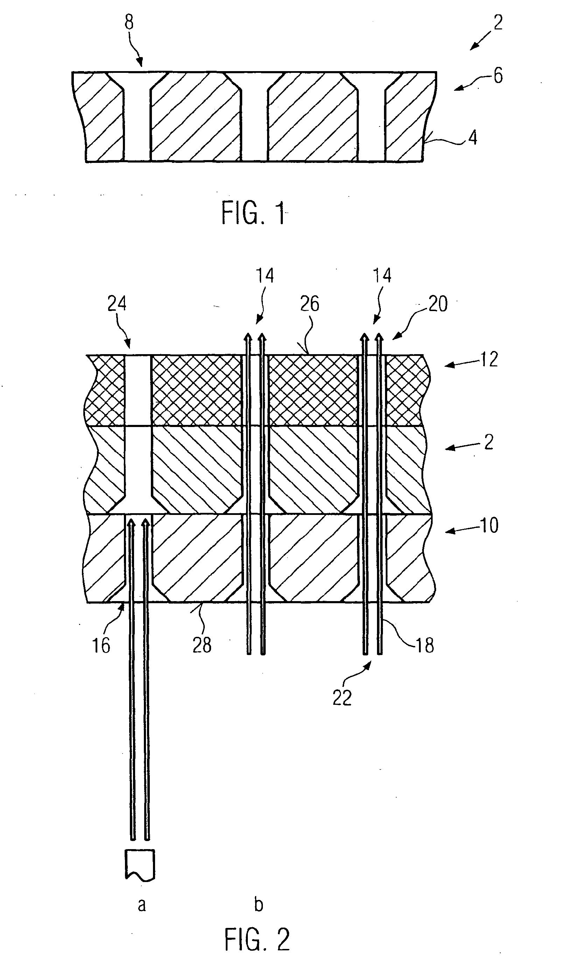

Fig. 1 zeigt eine aus Polypropylen geformte Trägerplatte 2. Die Trägerplatte 2 wird derart ausgeformt, dass entlang ihrer Umfangsfläche 4 ein Hinterschnitt 6 ausgebildet wird. Der Hinterschnitt 6 wird an dem Bereich der Umfangsfläche 4 der Trägerplatte 2 ausgeformt, der während eines Spritzgießvorgangs zum Herstellen einer Zahnbürste umspritzt wird, um somit die Trägerplatte 2 zuverlässig in einem Bürstenkopf zu fixieren. Diese Trägerplatte 2 weist mehrere Kanäle 8 auf, die jeweils einseitig mit einer trichterförmigen Mündung ausgebildet werden.

Fig. 2 zeigt eine vergrößerte Längsschnittansicht der Trägerplatte 2, die zwischen einer Bestopfungsplatte 10 und einer Lochfeldplatte 12 angeordnet ist. Die jeweiligen Platten 2, 10, 12 weisen ein identisches Lochfeldmuster auf, welches der Anordnung von Borstenbündeln 14 an der herzustellenden Zahnbürste entspricht. Dies trifft zumindest für die Anordnung der Löcher zu. Diese können durchaus andere Querschnittformen aufweisen. So ist es beispielsweise denkbar, die Bestopfungsplatte 10 mit kreisrunden Löchern zu versehen, an deren Position indes an den Platten 2 und 12 Löcher mit abweichender Querschnittsform vorgesehen sein können, beispielsweise dreieckige oder polygonale, abhängig von dem jeweiligen Design der herzustellenden Zahnbürste. Die Querschnittsflächen der entsprechenden Bohrungen der Platten 2, 10, 12 sind hierbei identisch. Auch können Übergangsformen vorgesehen sein, die der Überführung des zunächst als rundes Bündel zugeführten Borstenbündels in eine Dreiecksform unterstützen. Die Trägerplatte 2, die Bestopfungsplatte 10 und die Lochfeldplatte 12 sind derart angeordnet, dass die Längsachsen der jeweiligen das Lochfeldmuster bildenden Kanäle der Trägerplatte 2, der Bestopfungsplatte 10 und der Lochfeldplatte 12 fluchten. Die Mündung jedes Kanals 16 der Bestopfungsplatte 10 ist ebenfalls trichterförmig ausgebildet, um das Einführen von Borstenbündeln 14 zunächst in den Kanal 16 der Bestopfungsplatte 10 zu erleichtern. Diese Bestopfungsplatte 10 wurde an einer separaten Station mit Borstenbündeln 14 bestopft. Borstenfilamente 18, die an ihrem nutzungsseitigen Ende 20 auf bekannte Art und Weise angespitzt sind, werden hierbei zum axialen Überführen in die Bestopfungsplatte 10 zu einem Borstenbündel 14 zusammengefasst. Durch Drücken an dem befestigungsseitigen Ende 22 der Borstenfilamente 18 bzw. des Borstenbündels 14 wird das Borstenbündel 14 durch axiale Überführung zunächst mit dem nutzungsseitigen Ende 20 der Borstenfilamente 18 bzw. des Borstenbündels 14 in den Kanal 16 der Bestopfungsplatte 10 eingeführt (vgl. Position a) in Fig. 2). Die auf diese Weise vorbereitete Bestopfungsplatte 10 wird danach in die in Fig. 2 gezeigte Anordnung gebracht. Durch weiteres Drücken werden die nutzungsseitigen Enden 20 der Borstenbündel 14 in den Kanal 8 der Trägerplatte 2 und den Kanal 24 der Lochfeldplatte 12 eingeschoben. Die Borstenbündel 14 werden derart eingeführt, dass das nutzungsseitige Ende 20 des Borstenbündels 14 die Oberseite 26 der Lochfeldplatte 12 und das befestigungsseitige Ende 22 des Borstenbündels 14 die Unterseite 28 der Bestopfungsplatte 10 überragt (vgl. Position b) in Fig. 2). Nachdem sämtliche Kanäle 8 der Trägerplatte 2 mit Borstenbündeln 14 bestopft worden sind, wird die Bestopfungsplatte 10 entfernt.

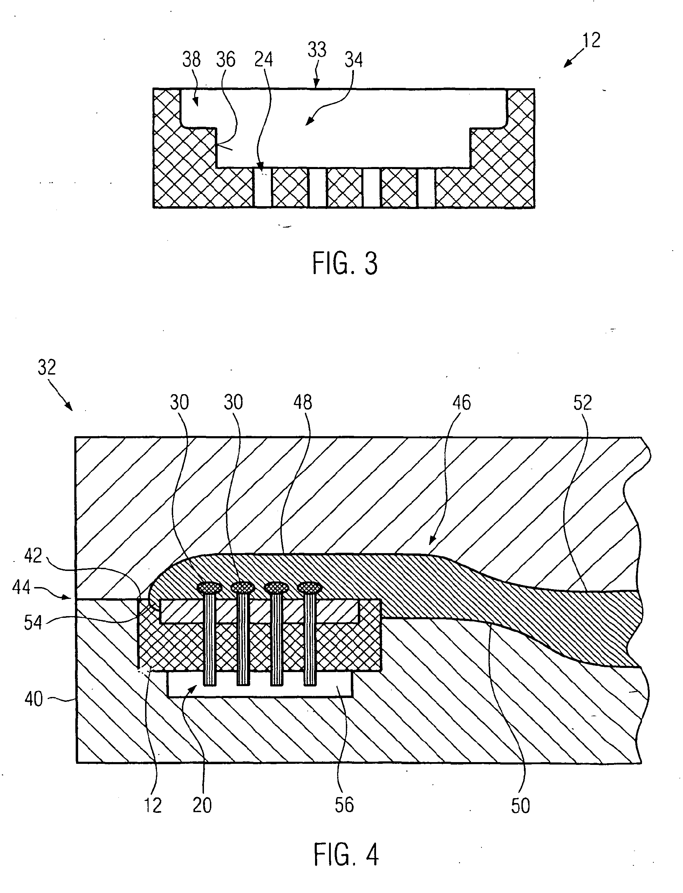

Nach Entfernen der Bestopfungsplatte 10 wird das befestigungsseitige Ende 22 des Borstenbündels 14 zur Ausbildung einer Verdickung 30 angeschmolzen. Die Verdickung 30 wird an die Mündung 8 der Kanäle 8 der Trägerplatte 2 angelegt, ggf. dagegen angeschmolzen. Die von der Trägerplatte 2 und Lochfeldplatte 12 gehaltenen Borstenbündel 14, welche an ihren jeweiligen befestigungsseitigen Enden 22 eine Verdickung 30 aufweisen, werden danach in eine Spritzgussform 32 eingesetzt (vgl. Fig. 4).

Fig. 3 zeigt eine Längsschnittansicht der Lochfeldplatte 12 ohne darin aufgenommene Trägerplatte 2. Die Lochfeldplatte 12 hat eine Vertiefung 33, die einen Halteabschnitt 34 aufweist, in dessen Bodenfläche die Mündungen der Kanäle 24 der Lochfeldplatte 12 ausgebildet sind. Der Halteabschnitt 34 ist derart ausgebildet, dass die Trägerplatte 2 darin dichtend aufgenommen werden kann. Die Vertiefung 33 weist auch einen Randformgebungsabschnitt 38 auf, an dem das umspritzte Kunststoffmaterial zur Ausbildung eines die Trägerplatte 2 umfänglich fassenden Randes 54 erstarrt.

Fig. 4 zeigt eine Längsschnittansicht der Spritzgussform 32 mit darin aufgenommener Lochfeldplatte 12 und Trägerplatte 2 nach Vollenden des Spritzgießvorgangs. Die Lochfeldplatte 12 ist derart in einer Formhälfte 40 angeordnet, dass die Unterseite 42 der Lochfeldplatte 12 in der Trennebene 44 der Spritzgussform 32 liegt. Durch den Spritzgießvorgang wird die Rückseite der Trägerplatte 2 unter Zwischenlage der Verdickungen 30 hinterspritzt, um einen Zahnbürsten-Grundkörper 46, umfassend einen Bürstenkopf 48, einen Bürstenhals 50 und einen Griffstiel 52, zu formen. Gleichzeitig wird auch die Trägerplatte 2 umspritzt, um den die Trägerplatte 2 formschlüssig aufnehmenden Rand 54 auszubilden. Da die Trägerplatte 2 dicht in dem Halteabschnitt 38 der Lochfeldplatte 12 angeordnet ist, kann während des Hinter- und Umspritzens kein Kunststoffmaterial zwischen der Umfangsfläche 36 und der Trägerplatte 2 und somit in die Kanäle 24 der Lochfeldplatte 12 hineinfließen. Die Verdickungen 30 liegen dichtend an den Mündungen der Kanäle 8 der Trägerplatte 2 an, wodurch verhindert wird, dass Kunststoffmaterial in die Kanäle 8 der Trägerplatte 2 hineinfließt.

Während des Spritzgießvorgangs ist das nutzungsseitige Ende 20 der Borstenbündel 14 in einem Formhohlraum 56 der Spritzgussform 30 freigelegt, d.h. diese Enden liegen in einem Freiraum frei und werden nicht durch eine stirnseitige Anlagefläche axial fixiert.

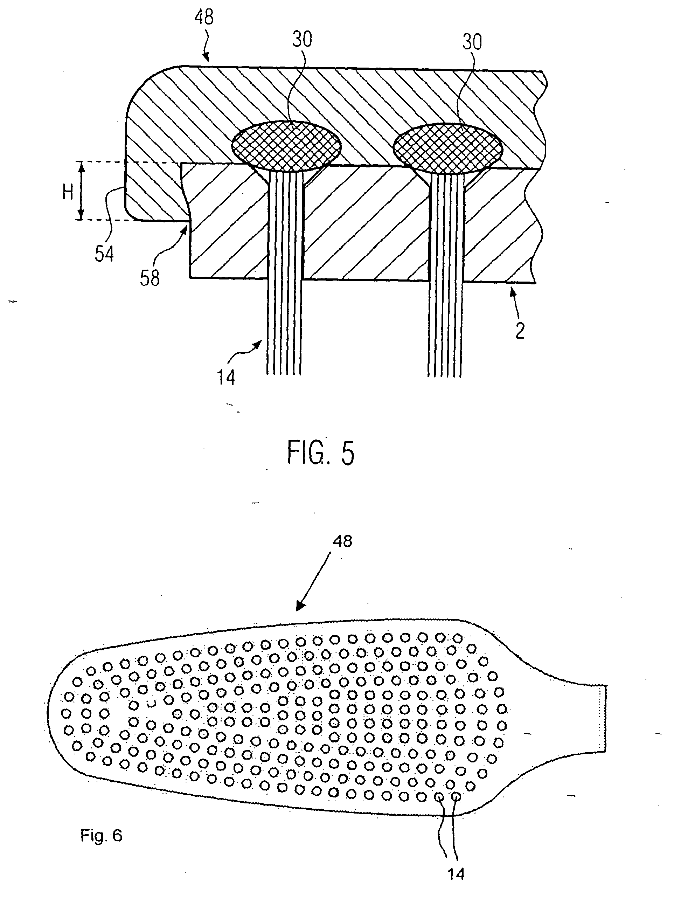

Fig. 5 zeigt eine vergrößerte Längsschnittansicht des Bürstenkopfes 48, der eine durch den Rand 54 begrenzte Ausnehmung 58 aufweist, in der die Trägerplatte 2 formschlüssig fixiert wird. Der Rand 54, welcher formschlüssig an der Umfangsfläche der Trägerplatte 2 ausgeformt ist, hat in Längsrichtung der Borstenbündel 14 eine Höhe H, die ungefähr 60% der Höhe der Trägerplatte 2 entspricht. In ihrem von dem Rand 54 umgebenen Umfangsabschnitt bildet die Trägerplatte 2 Formschlusselemente, hier in Form des nach außen ausgestellten rampenförmigen Hinterschnitts 6, aus.

Die Fig. 6 zeigt eine Draufsicht auf einen Bürstenkopf 48 einer Zahnbürste. Dieser Bürstenkopf 48 hat 248 Borstenbündel, d.h. die Trägerplatte 2 weist einen entsprechende Anzahl an Kanälen auf, die jeweils für sich ein Borstenbündel 14 mit einem Durchmesser von 0,6 mm haben. Diese Borstenbündel 14 werden beispielsweise jeweils durch sieben einzelne Filamente mit einem Durchmesser von jeweils 0,2 mm gebildet.

Bei einer alternativen denkbaren Ausgestaltung sind die Borstenbündel durch Filamente mit einem Durchmesser von 0,15 mm gebildet. Bei einer entsprechenden Anzahl von sieben Filamenten zur Bildung eines einzelnen Borstenbündels ergibt sich ein Bündeldurchmesser von etwa 0,45 mm. Verwendet man allein diese zur Ausbildung der reinigungsaktiven Fläche, so können mehr als die vorgenannten 248 Borstenbündel an dem Borstenbündel 14 an dem Bürstenkopf 48 verwirklicht werden, beispielsweise zwischen 200 und 400, vorzugsweise zwischen 250 und 325.

### Bezugszeichenliste

- 2: Trägerplatte
- 4: Umfangsfläche der Trägerplatte 2
- 6: Hinterschnitt
- 8: Kanal der Trägerplatte 2
- 10: Bestopfungsplatte
- 12: Lochfeldplatte
- 14: Borstenbündel
- 16: Kanal der Bestopfungsplatte 10
- 18: Borstenfilament
- 20: nutzungsseitiges Ende
- 22: befestigungsseitiges Ende
- 24: Kanal der Lochfeldplatte 12
- 26: Oberseite der Lochfeldplatte 12
- 28: Unterseite der Bestopfungsplatte 10
- 30: Verdickung
- 32: Spritzgussform
- 33: Vertiefung
- 34: Halteabschnitt
- 36: Umfangsfläche des Halteabschnitts 34
- 38: Randformgebungsabschnitt
- 40: Formhälfte
- 42: Unterseite der Lochfeldplatte 12
- 44: Trennebene
- 46: Zahnbürsten-Grundkörper
- 48: Bürstenkopf
- 50: Bürstenhals
- 52: Griffstiel
- 54: Rand
- 56: Formhohlraum
- 58: Ausnehmung
- H: Höhe des Randes 54

## Patentansprüche

1. Verfahren zur Herstellung einer Zahnbürste, umfassend die Schritte:
Einführen eines Borstenbündels (14) in einen an einer Trägerplatte (2) vorgesehenen Kanal (8), derart, dass das nutzungsseitige Ende (20) des Borstenbündels (14) die Oberseite der Trägerplatte (2) und das befestigungsseitige Ende (22) des Borstenbündels (14) die Unterseite der Trägerplatte (2) überragt,
Anschmelzen des befestigungsseitigen Endes (22) des Borstenbündels (14) zum Ausformen einer Verdickung (30), und
Hinterspritzen der Unterseite unter Zwischenlage der Verdickung (30),
**gekennzeichnet durch**,
Umspritzen der Trägerplatte (2) zum Ausformen einer die Trägerplatte (2) formschlüssig umfassenden Umspritzung.

2. Verfahren nach Anspruch 1, **dadurch gekennzeichnet, dass** durch die Umspritzung ein die Trägerplatte (2) fassender Rand (54) ausgebildet wird.

3. Verfahren nach Anspruch 2, **dadurch gekennzeichnet, dass** der Rand (54) vollumfänglich an der Umfangsfläche (4) der Trägerplatte (2) ausgeformt wird.

4. Verfahren nach einem der Ansprüche 1 bis 3, **dadurch gekennzeichnet, dass** das Hinter- und Umspritzen in einem Schritt durchgeführt wird.

5. Verfahren nach einem der Ansprüche 2 bis 4, **dadurch gekennzeichnet, dass** der Rand (54) derart ausgeformt wird, dass 1/3 bis 2/3 der Höhe der Trägerplatte (2) durch das Hinter- und Umspritzen eingebettet wird.

6. Verfahren nach einem der vorherigen Ansprüche, **dadurch gekennzeichnet, dass** die Trägerplatte (2) mit in etwa der Grundfläche eines Bürstenkopfes entsprechender Grundfläche ausgebildet wird.

7. Verfahren nach einem der vorherigen Ansprüche, **dadurch gekennzeichnet, dass** durch das Umspritzen gleichzeitig ein Zahnbürsten-Grundkörper (46) gespritzt wird, der einen Bürstenkopf (48), einen Hals (50) und einen Griffstiel (52) aufweist.

8. Verfahren nach einem der vorherigen Ansprüche, **dadurch gekennzeichnet, dass** das Borstenbündel (14) nach dem Einführen an seinem befestigungsseitigen Ende (22) auf Länge geschnitten und angeschmolzen wird.

9. Verfahren nach einem der vorherigen Ansprüche, **dadurch gekennzeichnet, dass** zum Einführen des Borstenbündels (14) die Trägerplatte (2) zwischen einer einen Kanal (16) aufweisenden Bestopfungsplatte (10) und einer einen Kanal (26) aufweisenden Lochfeldplatte (12) derart angeordnet wird, dass die Längsachsen der jeweiligen Kanäle (8, 16, 24) der Trägerplatte (2), der Bestopfungsplatte (10) und der Lochfeldplatte (12) fluchten, und dass das zunächst in dem Kanal (16) der Bestopfungsplatte (10) gehaltene Borstenbündel (14) durch Drücken gegen sein befestigungsseitiges Ende (22) in den Kanal (8) der Trägerplatte (2) und in den Kanal (24) der Lochfeldplatte (12) eingeschoben wird.

10. Verfahren nach Anspruch 9, **dadurch gekennzeichnet, dass** die Trägerplatte (2), die Bestopfungsplatte (10) und die Lochfeldplatte (12) jeweils mit dem gleichen Lochfeldmuster derart ausgebildet werden, dass die Borstenbündel (14) an der Zahnbürste entsprechend dem Lochfeldmuster angeordnet werden.

11. Verfahren nach Anspruch 9 oder 10, **dadurch gekennzeichnet, dass** das Borstenbündel (14) durch die mit dem Kanal (16) der Bestopfungsplatte (10) fluchtenden Kanäle (8, 24) der Träger- und Lochfeldplatte (2, 12) so hindurchgeführt wird, dass nach dem Einführen das nutzungsseitige Ende (20) des Borstenbündels (14) die Oberseite (26) der Lochfeldplatte (12) und das befestigungsseitige Ende (22) des Borstenbündels (14) die Unterseite (28) der Bestopfungsplatte (10) überragt.

12. Verfahren nach einem der Ansprüche 9 bis 11, **dadurch gekennzeichnet, dass** Borstenbündel (14) bildende Borstenfilamente (18) vor Überführen in die Bestopfungsplatte (10) vereinzelt angespitzt und zu einem Borstenbündel (14) zusammengeführt werden.

13. Verfahren nach einem der Ansprüche 9 bis 12, **dadurch gekennzeichnet, dass** die Borstenbündel (14) durch Abziehen eines Filamentstranges von einem Endlosstrang, Überführen des Stranges in einen der Kanäle (26) der Bestopfungsplatte und Abtrennten der Filamente von dem Strang gebildet werden.

14. Verfahren nach einem der Ansprüche 9 bis 13, **dadurch gekennzeichnet, dass** das Borstenbündel (14) beim Anschmelzen durch die Lochfeldplatte (12) und die Trägerplatte (2) gehalten wird.

15. Verfahren nach einem der Ansprüche 9 bis 14, **dadurch gekennzeichnet, dass** nach dem Anschmelzen die Lochfeldplatte (12) in eine Formhälfte (40) einer Spritzgussform (32) derart eingesetzt wird, dass die Unterseite (42) der Lochfeldplatte (12) in der Trennebene (44) der Spritzgussform (32) liegt, und die Trägerplatte (2) in einem Halteabschnitt (34) einer Vertiefung (33) der Lochfeldplatte (12) derart gehalten wird, dass das nutzungsseitige Ende (20) des von der Lochfeldplatte (12) geführten Borstenbündels (14) in einem Formhohlraum (56) der Formhälfte (40) freiliegt und die Begrenzungsflächen des Halteabschnitts (34) dicht an der Trägerplatte (2) anliegen.

16. Verfahren nach Anspruch 15, **dadurch gekennzeichnet, dass** die Lochfeldplatte (12) beim Hinter- und Umspritzen formgebend auf ein die Umspritzung bildendes Material einwirkt.

17. Verfahren nach einem der vorherigen Ansprüche, **dadurch gekennzeichnet, dass** das befestigungsseitige Ende (22) des Borstenbündels (14) mit seiner durch Anschmelzen gebildeten Verdickung (30) vor dem Umspritzen gegen eine Mündung des Kanals (8) der Trägerplatte (2) angelegt wird.

18. Verfahren nach einem der vorherigen Ansprüche, **dadurch gekennzeichnet, dass** die Trägerplatte (2) durch ein Polypropylen gebildet wird.

19. Verfahren nach einem der vorherigen Ansprüche, **dadurch gekennzeichnet, dass** die Trägerplatte (2) derart gebildet wird, dass der Bereich der Umfangsfläche (4), an dem die Umspritzung ausgeformt wird, einen Hinterschnitt (6) aufweist.

20. Verfahren nach einem der vorherigen Ansprüche, **dadurch gekennzeichnet, dass** die Trägerplatte (2) mit Polypropylen umspritzt wird.

## Claims

1. Method for producing a toothbrush, comprising the following steps:
inserting a bristle tuft (14) into a channel (8) provided on a carrier plate (2) in such a way that the end (20) of the bristle tuft (14) which is to be used sticks out of the top side of the carrier plate (2) and the end (22) of the bristle tuft (14) which is to be attached sticks out of the underside of the carrier plate (2),
fusing the end (22) of the bristle tuft (14), which is to be attached, to form a thickening (30) and
back injection moulding the underside embedding the swelling (30),
**characterised by**
overmoulding the carrier plate (2) to form an overmould enclosing the carrier plate (2) in a form-fit manner.

2. Method according to Claim 1, **characterised in that** an edge (54) gripping the carrier plate (2) is formed by the overmould.

3. Method according to Claim 2, **characterised in that** the edge (54) is formed completely on the peripheral surface (4) of the carrier plate (2).

4. Method according to any one of Claims 1 to 3, **characterised in that** the back injection moulding and overmoulding are carried out in one step.

5. Method according to any one of Claims 2 to 4, **characterised in that** the edge (54) is formed in such a way that 1/3 to 2/3 of the height of the carrier plate (2) is embedded by the back injection moulding and overmoulding.

6. Method according to any one of the preceding claims, **characterised in that** the carrier plate (2) is designed with a base area approximately corresponding to the base area of a brush head.

7. Method according to any one of the preceding claims, **characterised in that** by means of the overmoulding process at the same time a toothbrush base body (46) is injection-moulded which has a brush head (48), a neck (50) and a gripping stem (52).

8. Method according to any one of the preceding claims, **characterised in that** after it has been inserted the bristle tuft (14) is cut to length and fused on its end (22) which is to be attached.

9. Method according to any one of the preceding claims, **characterised in that** in order to insert the bristle tuft (14) the carrier plate (2) is arranged between a feeding plate (10), which has a channel (16), and a perforated field plate (12), which has a channel (26), in such a way that the longitudinal axes of the respective channels (8, 16, 24) of the carrier plate (2), the feeding plate (10) and the perforated field plate (12) are in alignment, and **in that** the bristle tuft (14) initially held in the channel (16) of the feeding plate (10) is pushed into the channel (8) of the carrier plate (2) and into the channel (24) of the perforated field plate (12) by pressing against its end (22) which is to be attached.

10. Method according to Claim 9, **characterised in that** the carrier plate (2), the feeding plate (10) and the perforated field plate (12) are each designed with the same perforated field pattern in such a way that the bristle tufts (14) are arranged on the toothbrush corresponding to the perforated field pattern.

11. Method according to Claim 9 or 10, **characterised in that** the bristle tuft (14) is guided through the channels (8, 24) of the carrier plate (2) and perforated field plate (12), which are in alignment with the channel (16) of the feeding plate (10), in such a way that after insertion the end (20) of the bristle tuft (14) which is to be used sticks out of the top side (26) of the perforated field plate (12) and the end (22) of the bristle tuft (14) which is to be attached sticks out of the underside (28) of the feeding plate (10).

12. Method according to any one of Claims 9 to 11, **characterised in that** the bristle filaments (18) forming the bristle tuft (14) are singly tapered and assembled into a bristle tuft (14) before they are conveyed into the feeding plate (10).

13. Method according to any one of Claims 9 to 12, **characterised in that** the bristles tufts (14) are formed by unreeling a filament strand from a continuous strand, conveying the strand into one of the channels (26) of the feeding plate and separating the filaments from the strand.

14. Method according to any one of Claims 9 to 13, **characterised in that** when it is fused the bristle tuft (14) is held by the perforated field plate (12) and the carrier plate (2).

15. Method according to any one of Claims 9 to 14, **characterised in that** after fusing the perforated field plate (12) is inserted into a mould half (40) of an injection mould (32) in such a way that the underside (42) of the perforated field plate (12) lies in the parting plane (44) of the injection mould (32) and the carrier plate (2) is held in a holding section (34) of a depression (33) in the perforated field plate (12) in such a way that the end (20), which is to be used, of the bristle tuft (14), which is guided by the perforated field plate (12), is isolated in a mould cavity (56) of the mould half (40) and the delimiting surfaces of the holding section (34) abut tightly on the carrier plate (2).

16. Method according to Claim 15, **characterised in that** during back injection moulding and overmoulding, the perforated field plate (12) has a shaping effect on a material forming the overmould.

17. Method according to any one of the preceding claims, **characterised in that** the end (22) of the bristle tuft (14), which is to be attached, with its swelling (30) formed by fusing is placed against an opening to the channel (8) of the carrier plate (2) before overmoulding.

18. Method according to any one of the preceding claims, **characterised in that** the carrier plate (2) is formed by a polypropylene.

19. Method according to any one of the preceding claims, **characterised in that** the carrier plate (2) is formed in such a way that the area of the peripheral surface (4) on which the overmould is formed has an undercut (6).

20. Method according to any one of the preceding claims, **characterised in that** the carrier plate (2) is overmoulded with polypropylene.

## Revendications

1. Procédé pour fabriquer une brosse à dents, comprenant les étapes suivantes :
introduction d'un faisceau de poils (14) dans un canal (8) prévu sur une plaque de support (2), de telle sorte que l'extrémité côté utilisation (20) du faisceau de poils (14) dépasse du côté supérieur de la plaque de support (2) et que l'extrémité côté fixation (22) du faisceau de poils (14) dépasse du côté inférieur de la plaque de support (2),
fusion de l'extrémité côté fixation (22) du faisceau de poils (14) pour former un épaississement (30), et
injection par l'arrière sur le côté inférieur, en couvrant l'épaississement (30),
**caractérisé par** l'enrobage par injection de la plaque de support (2) pour former un enrobage entourant par complémentarité de forme la plaque de support (2).

2. Procédé selon la revendication 1, **caractérisé en ce que** l'enrobage par injection forme un bord (54) qui borde la plaque de support (2).

3. Procédé selon la revendication 2, **caractérisé en ce que** le bord (54) est formé sur tout le périmètre de la surface périphérique (4) de la plaque de support (2).

4. Procédé selon l'une des revendications 1 à 3, **caractérisé en ce que** l'injection par l'arrière et l'enrobage par injection sont réalisés en une étape.

5. Procédé selon l'une des revendications 2 à 4, **caractérisé en ce que** le bord (54) est formé de telle sorte que 1/3 à 2/3 de la hauteur de la plaque de support (2) soient encastrés grâce à l'injection par l'arrière ou l'enrobage par injection.

6. Procédé selon l'une des revendications précédentes, **caractérisé en ce que** la plaque de support (2) est formée avec une surface de base qui correspond à peu près à la surface de base d'une tête de brosse.

7. Procédé selon l'une des revendications précédentes, **caractérisé en ce que** grâce à l'enrobage par injection est formé en même temps un corps de base de brosse à dents (46) qui présente une tête de brosse (48), un collet (50) et une poignée (52).

8. Procédé selon l'une des revendications précédentes, **caractérisé en ce que** le faisceau de poils (14), une fois introduit au niveau de son extrémité côté fixation (22), est coupé à la bonne longueur et fondu.

9. Procédé selon l'une des revendications précédentes, **caractérisé en ce que** pour l'introduction du faisceau de poils (14), la plaque de support (2) est disposée entre une plaque de garnissage (10) qui présente un canal (16), et une plaque à zone perforée (12) qui présente un canal (24), de telle sorte que les axes longitudinaux des canaux respectifs (8, 16, 24) de la plaque de support (2), de la plaque de garnissage (10) et de la plaque à zone perforée (12) soient alignés, et que le faisceau de poils (14) qui est tout d'abord retenu dans le canal (16) de la plaque de garnissage (10) soit glissé dans le canal (8) de la plaque de support (2) et dans le canal (24) de la plaque à zone perforée (12) grâce à une pression contre son extrémité côté fixation (22).

10. Procédé selon la revendication 9, **caractérisé en ce que** la plaque de support (2), la plaque de garnissage (10) et la plaque à zone perforée (12) sont pourvues d'un même modèle de zone perforée, de telle sorte que les faisceaux de poils (14) sont disposés sur la brosse à dents suivant le modèle de zone perforée.

11. Procédé selon la revendication 9 ou 10, **caractérisé en ce que** le faisceau de poils (14) est passé à travers les canaux (8, 24) de la plaque de support et de la plaque à zone perforée (2, 12) situés dans l'alignement du canal (16) de la plaque de garnissage (10) de telle sorte qu'après l'introduction, l'extrémité côté utilisation (20) du faisceau de poils (14) dépasse du côté supérieur (26) de la plaque à zone perforée (12) et que l'extrémité de fixation (22) du faisceau de poils (14) dépasse du côté inférieur (28) de la plaque de garnissage (10).

12. Procédé selon l'une des revendications 9 à 11, **caractérisé en ce que** des filaments de poils (18) formant les faisceaux de poils (14), avant d'être transférés dans le plaque de garnissage (10), sont taillés en pointe individuellement et sont réunis en un faisceau de poils (14).

13. Procédé selon l'une des revendications 9 à 12, **caractérisé en ce que** les faisceaux de poils (14) sont formés grâce à l'extraction d'un écheveau de filaments à partir d'un écheveau sans fin, au transfert de l'écheveau dans l'un des canaux (26) de la plaque de garnissage, et à la séparation des filaments à partir de l'écheveau.

14. Procédé selon l'une des revendications 9 à 13, **caractérisé en ce que** le faisceau de poils (14), lors de la fusion, est tenu par la plaque à zone perforée (12) et la plaque de support (2).

15. Procédé selon l'une des revendications 9 à 14, **caractérisé en ce qu'**après la fusion, la plaque à zone perforée (12) est placée dans une moitié (40) d'un moule à injection (32) de telle sorte que le côté inférieur (42) de ladite plaque à zone perforée (12) se trouve dans le plan de séparation (44) du moule (32), et la plaque de support (2) est tenue dans une partie de retenue (34) d'un creux (33) de la plaque à zone perforée (12) de telle sorte que l'extrémité côté utilisation (20) du faisceau de poils (14) guidé par la plaque à zone perforée (12) soit dégagée dans une cavité (56) de la moitié de moule (40) et que les surfaces de délimitation de la partie de retenue (34) soient appliquées tout contre la plaque de support (2).

16. Procédé selon la revendication 15, **caractérisé en ce que** la plaque à zone perforée (12), lors de l'injection par l'arrière et de l'enrobage par injection, a une action de formage sur un matériau qui forme l'enrobage par injection.

17. Procédé selon l'une des revendications précédentes, **caractérisé en ce que** l'extrémité côté fixation (22) du faisceau de poils (14), avant l'enrobage par injection, est appliquée avec son épaississement (30) formé par fusion contre une ouverture du canal (8) de la plaque de support (2).

18. Procédé selon l'une des revendications précédentes, **caractérisé en ce que** la plaque de support (2) est formée par un polypropylène.

19. Procédé selon l'une des revendications précédentes, **caractérisé en ce que** la plaque de support (2) est formée de telle sorte que la zone de la surface périphérique (4) au niveau de laquelle est formé l'enrobage par injection présente une contre-dépouille (6).

20. Procédé selon l'une des revendications précédentes, **caractérisé en ce que** la plaque de support (2) est enrobée par injection avec du polypropylène.
